Europäisches Patentamt

European Patent Office

Office européen des brevets

(19)

(11) Publication number: **0 002 569**

A1

# EUROPEAN PATENT APPLICATION

(12)

(21) Application number: 78300636.4

(22) Date of filing: 17.11.78

(51) Int. Cl.²: **B 60 B 35/02**
F 16 C 17/26, B 60 B 35/18

(30) Priority: 25.11.77 GB 4909477

(43) Date of publication of application:
27.06.79 Bulletin 79/13

(84) Designated contracting states:
BE DE FR GB LU NL SE

(71) Applicant: GKN Group Services Limited
Group Head Office P.O. Box 55
Smethwick Warley West Midlands B66 2RZ(GB)

(72) Inventor: Dolton, Anthony David
44, Barn Drive
Cox Green Maidenhead Berkshire(GB)

(72) Inventor: Howse, Ronald Norman
Westhaven School Road Waltham St Lawrence
Nr. Reading Berkshire(GB)

(72) Inventor: Fry, Timothy Selwyn
13 Southam Road
Dunchurch Warwickshire(GB)

(74) Representative: Robertson, Bernard Collett et al,
Guest, Keen & Nettlefolds Limited Group Head Office
P.O. Box 55
Smethwick, Warley West Midlands B66 2RZ(GB)

(54) Axles.

(57) A motor vehicle wheel support assembly, comprising a
stub axle and a casing one of which is fixed to the vehicle and
the other of which is rotatably mounted by thin-walled
bearing liners (23. 24. 53, 63, 73, 114, 115) within the casing.
A thrust plate (29, 54, 64, 74, 132) carried by the axle and
thrust washers (31, 33, 55, 65, 75, 134) carried by the casing
constrain relative axial movement.

EP 0 002 569 A1

FIG 1.

1

P77.04/GMD          Plain Bearing Hub

This invention relates to an assembly for supporting a road wheel of a motor vehicle.

Conventional practice at present is, for those wheels of a vehicle which are not driven, to have a stub axle on which a hub is mounted by ball or roller bearings. In the case of wheels which are driven, it is usual to have stationary hubs or casings in which are mounted rotatable axles, again by ball or roller bearings. Whilst such arrangements are satisfactory, ball and roller bearings are expensive and are comparatively bulky.

It is an object of the present invention to provide a motor vehicle wheel support assembly which utilizes plain bearings in place of rolling element bearings presently used.

According to the invention, we provide a motor vehicle wheel support assembly, comprising a stub axle and a casing, one of said axle and casing being connected to a suspension component of the vehicle and being non-rotatable and the other of said axle and casing being connected to a road wheel of the vehicle and being rotatably mounted by a thin wall bearing liner within the casing and receiving the axle with a radial bearing clearance, at least one thrust plate carried by the axle, and thrust washer means carried by the casing and engaging said at least one thrust plate to constrain relative axial movement between the axle and casing.

By a stub axle we mean an axle which supports only the one wheel of the vehicle with which it is associated; i.e. does not extend across the width of the vehicle and carry wheels on opposite sides thereof.

In conventional practice as referred to above, utilizing rolling element bearings, it has been usual for axial loads to be resisted by the bearings, e.g. by incorporating a ball bearing capable of resisting axial load or opposed taper roller bearings. According to the present invention, however, the axial loads are resisted and axial movement constrained by the thrust plate or plates and thrust washers.

Preferably there are provided two thin walled bearing liners spaced axially of the axle and casing. By this means, loads due to the weight of the vehicle are more easily resisted.

Either the stub axle or the casing may be the rotatable member, and embodiments of both these constructions are described hereafter.

The invention will now be described by way of example with reference to the accompanying drawings, in which

FIGURE 1 is a longitudinal cross-section through an axle and hub combination embodying the invention,

FIGURE 2 is an outline cross-section of the axle on the line 2 - 2 of Figure 1,

FIGURE 3 is an outline cross-section of the bore of the hub on the line 3 - 3 of Figure 1,

FIGURE 4 shows diagrammatically some further configurations of bearing,

FIGURE 5 is a longitudinal cross-section through a further emodiment of axle and hub combination according to the invention.

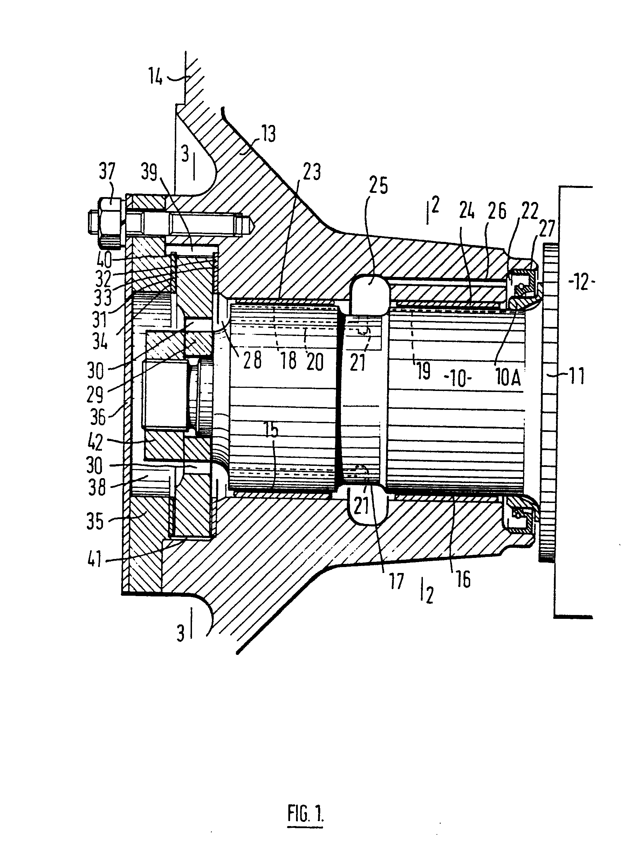

Referring firstly to Figures 1 to 3 of the drawings, a stub axle is indicated at 10 and at its right hand has a flange 11 whereby it can be connected to a fixed or steerable support 12.

Surrounding the stub axle is a hub or casing indicated generally at 13, the hub having an external flange 14 to which a road wheel, not shown, will be connected.

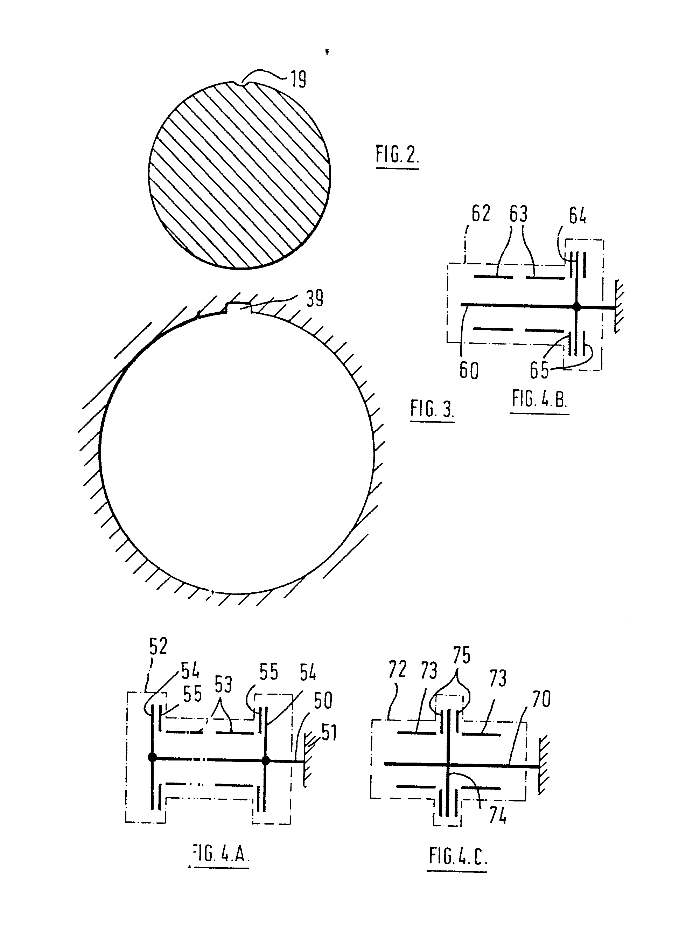

The stub shaft 10 has axially-spaced cylindrical journal surfaces 15 and 16 separated by a circumferential groove 17. The upper part of each of the surfaces 15 and 16 is provided with a shallow axial groove 18 and 19 respectively, the shape of the groove 19 being shown in Figure 2.

The stub shaft 10 is provided with axial passages 20 which communicate via radial passages 21 with the outer circumferential groove 17 between the journal surfaces. The axial passages 20 also communicate with a clearance 28 which will be referred to below.

A thin-walled bearing liner 23 surrounds the cylindrical journal surface 15 and a thin-walled bearing liner 24 surrounds the journal surface 16. The liners are a press fit in the bore of the hub 13 to rotate therewith. Within the hub there is a circumferential recess 25 and the passages 21 communicate with this recess 25. The hub 13 has axial passages, one of which is shown at 26, which communicate with the recess 25 and the clearance 22 between the right hand end of the liner 24 and a seal 27 between a wear ring 10a on the axle 10 and the hub 13. It will be noted that the recess 25 provides an axial clearance between the adjacent ends of the liners 23 and 24 and that there is an axial clearance 28 at
the left hand end of the liner 23. Each of the clearances
22 and 28 and the recess 25 extends circumferentially
about the axle.

A circular thrust plate 29 is axially located on the
left hand end of the axle and is provided with axial
openings two of which are shown at 30. Thrust washers
31 and 32 engage opposed surfaces on the outer peripheral part of the thrust plate 29. The thrust washer 31
engages a surface 33 on the hub 13 and the thrust washer
32 engages a surface 34 on a ring 35. A closing plate or
cap 36 closes the end of the hub thus providing a reservoir space 38 for lubricant which may be oil or grease.
The ring 35 and plate 36 are secured to the hub by studs
and nuts 37. A slot 39 is provided in the hub to receive
tabs 40 on the thrust washers to prevent rotation thereof.
Each washer consists of four segments, one of which
carries the tab 40.

There will be a diametral clearance between the
journal surfaces 15 and 16 and the internal surfaces of
the bearing liners. The surfaces 15 and 16 are cylindrical as shown in Figure 2 except for the grooves 18 and
19 and the internal surfaces of the bearing liners 23 and
24 are also cylindrical without any grooves. Upon rota-
tion of the hub 13 relative to the axle 10 lubricant will
build up in a wedge diverging, in a direction opposite
to the direction of rotation of the hub, from the lower-
most line of contact between the journal and the bearing
liners. The direction of extension of the wedge from
this line will depend on the direction of relative rotation between the hub and the axle. Lubricant will be
squeezed out into the recess 25 and the clearances 22 and
28 and can then flow back round the axle to be re-entrained into the wedge. There will thus be a circulation of
lubricant. This circulation will also entrain lubricant from the reservoir 38 and the passages 20, 21 and 26 which contributes to facilitate lubricant circulation. The openings 30 in the thrust plate will place clearance 28 in communication with the reservoir 38. Lubricant will also move outwardly to the inner edges of the thrust washers 31 and 32 and will lubricate the bearing surfaces of the thrust washers and the thrust plate. There is a small clearance 41 around the outer circumference of the thrust plate.

The hub is held on the axle by a nut 42 on the end of the axle and which engages the thrust plate 29.

In the case where only one bearing liner is used to co-operate with both journal surfaces 15 and 16 the liner is provided with a series of holes around the circumference between the journal surfaces to provide for circulation of lubricant.

The embodiment depicted in Figures 1 to 3 of the drawings is one in which the thrust plate and thrust washers are disposed outboard of the bearing liners. However, the disposition of the means which resists relative axial movement between the stub axle and hub could be different, and some possible alternative arrangements are shown diagrammatically in Figure 4.

In Figure 4a, there is shown a stub shaft 50 connected to a support 51, and carrying for rotation a casing 52 with two spaced thin wall bearing liners 53 therein. The stub axle 50 carries two thrust plates 54 each of which co-operates with a single thrust washer 55 carried by the casing 52 to resist axial movement in one direction, the two thrust plates together resisting all relative axial movement between the stub axle and casing.

In Figure 4b, a fixed stub axle 60 has a single thrust plate 64 running between thrust washers 65 disposed at the inboard end of casing 62 with two thin wall bearing liners 63. In Figure 4c, a thrust plate 74 is disposed adjacent the centre of a stub axle 70, and co-operates with washers 75 disposed between spaced thin wall bearing liners 73 in a casing 72. Other arrangements of the bearing liners and arrangements for taking axial loads could also be provided.

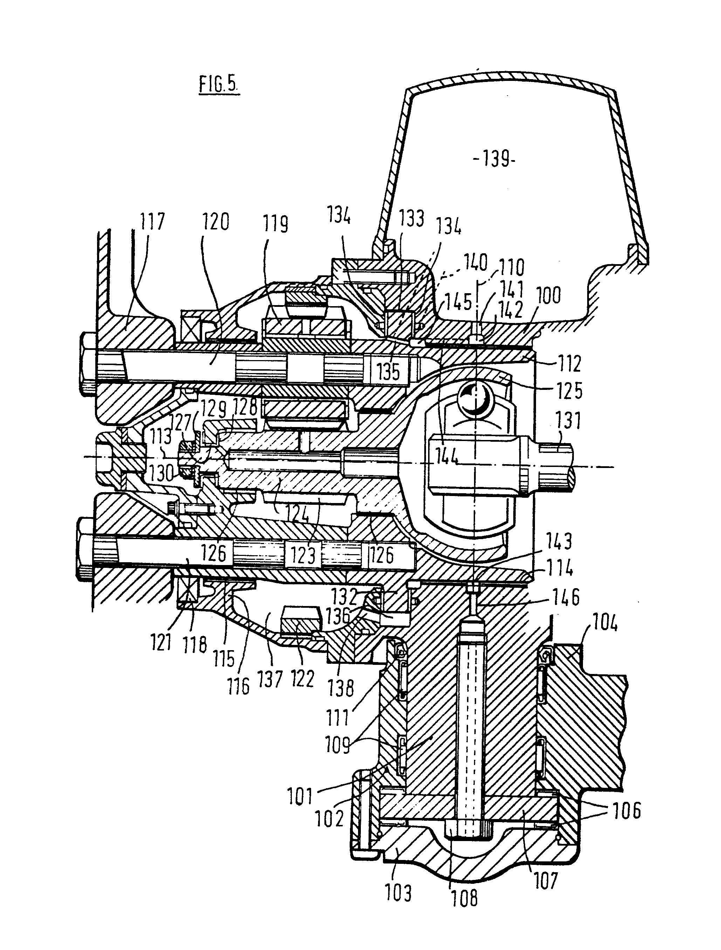

Referring now to Figure 5 of the drawings, there is shown a motor vehicle wheel support assembly which includes in effect, a stationary hub or casing and a rotatable stub axle as compared with the stationary stub axle and rotatable hub of Figures 1 - 3.

The embodiment of Figure 5 comprises a casing 100 in the general form of a hollow cylinder, provided with a downwardly depending spigot 101. The spigot 101 is received in a cup 102 with a removable bottom plate 103, formed on the end of a suspension member 104 of a motor vehicle. A thrust bearing 105, with races 106 and a thrust plate 107 secured to spigot 101 by a hollow bolt 108, and roller bearings 109, provide for steering movement of the casing 100 about a vertical axis 110. An oil seal 111 is provided within the top of the cup 102, and engages a cylindrical surface at the top of spigot 101.

The casing 100 receives a member 112 which is analogous to the stub shaft of the embodiment of Figures 1 - 3. The member 112 is mounted within the casing 100, for rotation about axis 113, by two thin-walled bearing liners;114 which coincides with the steering axis 110, and 115 received in a cylindrical formation on the inside of a web 116 at the forward end of the casing 100. The member 112 carries at its forward end the centre 117 of a road wheel of the vehicle, and an oil seal 118 is operative between the casing 100 and member 112 at this end.

The member 112 also forms the planet carrier of a planetary reduction gear, the member 112 having three radially extending apertures in each of which is disposed a planet gear wheel 119 rotatably received on a shaft 120 extending longitudinally of member 112 and intersecting the window. The member 112 is of two part construction, and the shafts 120 are appropriately screw-threaded to act as bolts to hold the member together, there being six such shafts three of which (as shown at 121) do not extend through windows in the member. An annulus gear 122 is fixed within the casing 100, and a sun gear 123 is provided on an extension 124 of the outer member 125 of a constant velocity universal joint, the extension 124 being rotatably mounted within the member 112 by thin-walled bearing liners 126 and axially located within such member by a thrust bearing 127 in member 112, running between a shoulder 128 on extension 124 and a collar 129 secured thereto by a nut 130. The constant velocity joint has its centre about which it can accommodate bending movement coincident with the steering axis 110, and provides for transmission to the planetary reduction gear from an input shaft 131. The reduction gear as above described is thus of the type in which the planet carrier constitutes the output member, the wheel centre 117 rotating with member 112.

The member 112 is provided with a radially outwardly extending thrust plate 132, which is received in a groove 133 formed in the casing 100, thrust washers 134 being provided in such groove on either side of the thrust plate. A plurality of circumferentially spaced inclined apertures 135 are provided to extend axially through the thrust plate 133. In the upper region of the casing, extending over about 90 degrees of arc, the outer circumferential wall of groove 133 is a close fit to the circumference of the thrust plate 132, whilst over the remainder of the periphery of groove 133 the wall has a clearance from the thrust plate. This is shown at 136 at the bottom of the casing 100. The lower region of the casing 100 at the annulus gear 122 is

formed as a sump 137, and a passage 138 extends therefrom into the lower part of groove 133.

An enclosure 139 is provided at the top of the casing 100 and this provides a reservoir for lubricant. Two inclined passages 140 extend upwardly into the reservoir from the groove 133 at the points of transition of such groove from being a close fit to the thrust ring 132 to having a clearance therefrom. The effect of this is that when the thrust ring 132 is rotating it will act as an impeller to impel lubricant which enters groove 133 by way of passageway 138 up into the reservoir, and as there are two passageways 140 this effect will apply for either direction of rotation of the thrust ring.

A passage 141 extends downwardly from the base of the oil reservoir, and opens into an annular chamber 142 surrounding the bearing liner 114. A hole 143 in the bottom of the bearing liner 114 provides for feed of lubricant from the annulus 142 to the bearing surface of the liner. A groove 144 extends horizontally from annulus 142, and provides for feed of lubricant into a further annular chamber 145 from which the lubricant can lubricate the thrust washers 134 and pass through passageways 135 in the thrust ring 132. A bore 146 extends downwardly from the bottom of annulus 142, to allow lubricant to enter the hollow bolt 108 and fill the cup 102 to lubricate the bearings which provide for steering movement of the assembly. This lubricant is retained by seal 111.

In use, lubricant which enters the annulus 142 passes upwardly through hole 143 to lubricate the bearing liner 114, downwardly through bore 146 to lubricate the steering swivel bearing arrangement as above described, and along the groove 144 to lubricate the thrust bearing arrangement and pass through passageways 135. From passageways 135, the lubricant reaches the annulus gear 122, and by being thrown and by the action of planet gears 119 is brought inwardly to lubricate the bearing liners 126 and the sun gear 123. Such lubricant also accumulates between web 116 and seal 118, and lubricates bearing liner 115. Lubricant falling to the sump 137 at the bottom of casing 100 is returned by passage 138 to the clearance 136 around the thrust ring 132, and is returned by the rotation thereof to the oil reservoir as above described.

The invention thus provides a hub incorporating planetary reduction gearing, with a considerable saving of space accomplished by the use of thin wall bearing liners, an adequate lubrication system being provided to ensure that such bearing liners perform satisfactorily.

Although not specifically illustrated above, sealing means would of course be provided at the inboard end of the assembly, to prevent escape of lubricant. For example, a flexible gaiter or boot may be used to close the end of the member 112, relative to the shaft 131, and a running seal may be provided between members 112 and 100.

As described above in relation to the embodiment of Figures 1 - 3, alternative arrangements of the thin wall bearing liners and thrust plate and washers could also be utilized, for example by the disposition of the thrust plate and washers inboard or outboard of both bearing liners or in various combinations.

Further, although as described the wheel support assembly is one incorporating planetary reduction gearing for drive of the vehicle wheel, thin walled bearing liners as described may be incorporated in an assembly with a rotary stub axle and a stationary casing which does not incorporate any provision for drive. In such a case, the assembly would merely comprise a casing and a stub axle, with thin walled bearing liners in the casing and a thrust plate and thrust washers for axial location of the stub axle. The assembly could incorporate means for lubrication as described above in relation to the driven version, and could be steerable or non-steerable.

In the embodiment of Figure 5, the particular arrangement of the bearing liner 114 relative to the steering axis 110, and the support of the universal joint outer member 125 in the assembly, provide for accurate centering of the universal joint relative to the steering axis and thereby desirable working conditions for such joint. The bearing liners by which the universal joint outer member is supported relative to the stub axle member 112 would provide a relatively great radial clearance, to allow the sun gear 123 to align itself relative to the planet gears 119.

CLAIMS

1.    A motor vehicle wheel support assembly, comprising a stub axle and a casing, one of said axle and casing being connected to a suspension component of the vehicle and being non-rotatable and the other of said axle and casing being connected to a road wheel of the vehicle, characterised in that the axle and casing are mounted for relative rotation by a thin-walled bearing liner (23, 24, 53, 63, 73, 114, 115) within the casing and receiving the axle with a radial bearing clearance, at least one thrust plate (29, 54, 64, 74, 132) carried by the axle, and thrust washer means (31, 33, 55, 65, 75, 134) carried by the casing and engaging said at least one thrust plate to constrain relative axial movement between the axle and casing.

2.    An assembly according to claim 1, further characterised in that there are provided two thin walled bearing liners (23, 24, 53, 63, 73, 114, 115) spaced axially of the casing.

3.    An assembly according to claim 2, further characterised in that there is one thrust plate (74, 132) disposed between said two thin-walled bearing liners (73, 114, 115).

4.    An assembly according to any of the preceding claims, further characterised in that said casing is connected to said suspension component by bearing means providing for steering movement of said casing about a steering axis, and a thin walled bearing liner (114) has its centre on said axis (110).

5.    An assembly according to any of the preceding claims, further characterised in that said thrust plate (132, 29) is provided with axially extending passages (135, 30) for flow of lubricant there through.

6.     An assembly according to any one of the preceding claims, further characterised in that said casing is provided with a reservoir (139) for lubricant above said bearing liners, means (141, 142, 144, 143, 145, 135) for feeding lubricant from said reservoir to said bearing liners, and means for returning lubricant to said reservoir.

7.     An assembly according to claim 6 further characerised in that said means for returning lubricant to said reservoir comprises said thrust plate (132), an annular groove (133) in which said thrust plate runs, said groove having a radial clearance (136) from said thrust plate over the lower part of the periphery thereof, a sump (137) in said casing and means (138) for supplying lubricant from said sump to said clearance space (136), and a passageway (140) extending from said groove (133) to said reservoir, whereby rotation of said thrust plate impels lubricant from said groove to said reservoir.

8.     An assembly according to claim 4, or any of claims 5 - 7 as appendant thereto, further characterised in that it is a drive assembly incorporating gearing (123, 119, 122) providing for drive from an input shaft (131) to the vehicle wheel,  by way of a universal joint (125) supported in said stub axle (112) by further thin-walled bearing liners (126) and having its bending centre line coincident with said steering axis (110).

9.     An assembly according to claim 6 as appendant to claim 4 further characterised in that said bearing means (106, 109) is disposed below said bearing liners (114, 115) and there is provided means (108, 146) providing for supply of lubricant to said bearing means (106, 109).

FIG. 1.

FIG. 2.

FIG. 3.

FIG. 4. A.

FIG. 4. B.

FIG. 4. C.

3/3

FIG.5.

## European Patent Office

# EUROPEAN SEARCH REPORT

Application number

EP 78 30 0636

## DOCUMENTS CONSIDERED TO BE RELEVANT

| Category | Citation of document with indication, where appropriate, of relevant passages | Relevant to claim |
|---|---|---|
| X | FR - A - 2 035 182 (SIMCA) <br> * Page 3, line 17 - page 4, line 3; page 5, line 30 - page 6, line 17; figures 1,3 * | 1 |
| A | DE - B - 1 059 248 (KLEIN) <br> * Column 2, line 38 - column 3, line 15; figures 1-5 * | 1 |
| A | FR - A - 2 267 480 (VANDERVELL) <br> * Page 2, line 29 - page 4, line 18; figures 1-5 * | 1 |
| A | GB - A - 144 493 (ROTHERMEL) <br> * Page 2, line 47 - page 3, line 23; figures 1,2 * | 1 |
| A | AU - A - 434 406 (VICTA) <br> * Page 3, line 17 - page 4, line 16; figure 4 * | 1 |

### CLASSIFICATION OF THE APPLICATION (Int. Cl.²)

B 60 B 35/02
F 16 C 17/26
B 60 B 35/18

### TECHNICAL FIELDS SEARCHED (Int.Cl.²)

B 60 B 35/00
F 16 C 17/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 01-03-1979 | AYITER |

EPO Form 1503.1  06.78